# EUROPÄISCHE PATENTANMELDUNG

(11) **EP 1 524 513 A2**
(43) Veröffentlichungstag der Anmeldung: **20.04.2005**
(21) Anmeldenummer: 04022879.3
(22) Anmeldetag: 24.09.2004
(51) Int. Cl.: G01N 3/32, B64F 5/00

(54) **Druck-Schubanlage zur Einleitung von hohen Schublasten in ein vorzugsweise gewölbtes Flugzeugbauteil**

(30) Priorität: 26.09.2003 DE 10344855
(71) Anmelder: Airbus Deutschland GmbH, 21129 Hamburg (DE)
(72) Erfinder: Oesmann, Werner, 21147 Hamburg (DE); Kotzke, Andreas, 25355 Elmshorn (DE); Schleret, Jean-Charles, 22089 Hamburg (DE); Peters, Peter, 21640 Horneburg (DE)
(74) Vertreter: Klöpper, Ute, Dipl.-Ing.

(57) **Zusammenfassung**

Druck-Schubanlage zur Durchführung von Belastungsversuchen an einem Flugzeugbauteil, wobei die Einleitung der Drucklast in das Flugzeugbauteil durch einen Krafteinleitungstisch erfolgt, der mit einem gerüstseitigen Widerlager das Flugzeugbauteil umfasst und der von einem kraftgeregelten Hydraulikzylinder in vorzugsweise vertikaler Richtung des Widerlagers bewegt wird. Die vorzugsweise vertikalen Schublasten werden über zwei parallel zum Flugzeugbauteil angeordnete, in ihrer Wirkrichtung gegensätzliche Schubbalken mit integrierten Hydraulikzylindern derart in das Flugzeugbauteil eingeleitet, dass die Druck- und Schublasten in gleicher Richtung wirken und über getrennt regelbare Elemente aufgebracht werden.

Hierzu wird die nach oben wirkende vertikale Schubkraft durch einen oberhalb einer als Widerlager wirkenden Druckplatte angeordneten kraftgeregelten Hydraulikzylinder derart aufgebracht, dass eine horizontal verstellbare Lagerung des Hydraulikzylinders auf einen mit der Druckplatte zusammenwirkenden Kopfrahmen erfolgt sowie zwei seitlich geführte Zuganker die Kraftübertragung auf den Schubbalken übernehmen. Die nach unten wirkende vertikale Schubkraft wird durch zwei seitlich am zugehörigen Schubbalken angelenkte kraftgeregelte Hydraulikzylinder aufgebracht, die sich direkt an der Druckplatte abstützen sowie an der Konsole des in den Schubbalken integrierten Hydraulikzylinders drehbeweglich gelagert sind.

## Beschreibung

Die Erfindung betrifft eine Druck-Schubanlage zur Einleitung von hohen Schublasten in ein vorzugsweise gewölbtes Flugzeugbauteil zur Durchführung von Belastungsversuchen, wobei die Einleitung der Drucklast in das Flugzeugbauteil durch einen Krafteinleitungstisch erfolgt, der mit einem gerüstseitigen Widerlager das Flugzeugbauteil umfasst und der von einem kraftgeregelten Hydraulikzylinder in vorzugsweise vertikaler Richtung des Widerlagers bewegt wird, und wobei die vorzugsweise vertikalen Schublasten über zwei parallel zum Flugzeugbauteil angeordnete, in ihrer Wirkrichtung gegensätzliche Schubbalken mit integrierten Hydraulikzylindern derart in das Flugzeugbauteil eingeleitet werden, dass die Druck- und Schublasten in gleicher Richtung wirken und die Elemente zur Schubkrafteinleitung die sich unter Druckbelastung einstellende Längenänderung des Flugzeugbauteiles kompensieren.

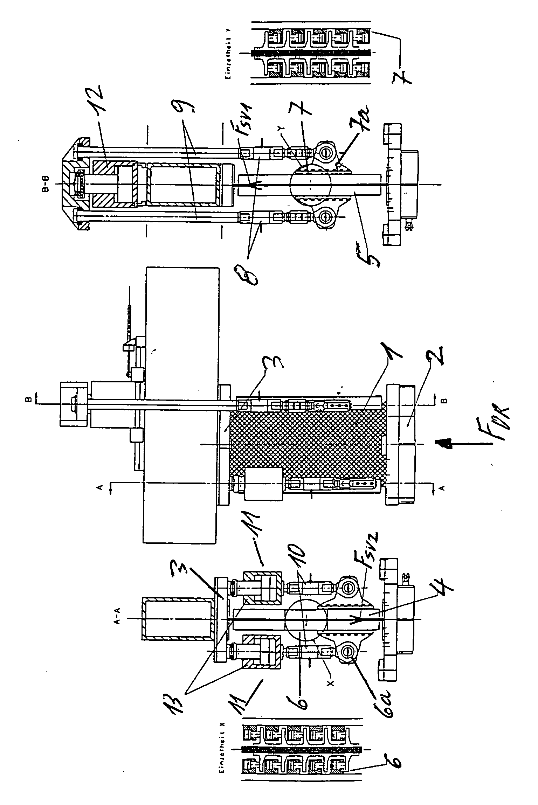

Zur Durchführung von Belastungsversuchen an gewölbten Flugzeugbauteilen wird eine bekannte Druck-Schubanlage verwendet, wie sie teilweise der Zeichnung zu entnehmen ist. Hierbei erfolgt die Einleitung der Drucklast F_{DR} in das Flugzeugbauteil 1 durch einen Krafteinleitungstisch 2, welcher durch einen zeichnerisch nicht dargestellten kraftgeregelten Hydraulikzylinder in Richtung des Flugzeubauteiles 1 bewegt wird, vorzugsweise in vertikaler Richtung. Die Druckeinleitung in das Flugzeugbauteil 1 erfolgt über speziell gestaltete Randverstärkungen. Das Flugzeugbauteil ist von dem Krafteinleitungstisch 2 und einer dem Tisch gegenüberliegenden Druckplatte 3 umfaßt, die als Widerlager wirkt und in einem zeichnerisch nicht dargestellten Kopfrahmen verschraubt ist. Die Basis für den zeichnerisch nicht dargestellten Hydraulikzylinder bildet eine in einem Gerüst aufgehängte Traverse, wobei die Verbindung von Traverse und Gerüst durch gelenkig gelagerte Zuganker mit integrierten Kraftmessstäben hergestellt wird. Zwei an dem Krafteinleitungstisch 2 angelenkte Hydraulikzylinder erzeugen die horizontale Schubkraftkomponente F_{Sh}.

Die vertikalen Schubkräfte werden über zwei Schubbalken 4 bzw. 5 mit integrierten kraftgeregelten Hydraulikzylindern 6 und 7 in das Flugzeugbauteil 1 eingeleitet, wobei die durch Pfeile gekennzeichnete Wirkrichtung der Schubbalken 4 und 5 gegensätzlich zueinander ist. Die Hydraulikzylinder 6 und 7 sind paarweise in einem Raster von zum Beispiel 100 mm in den sich entlang dem Flugzeugbauteil 1 erstreckenden Schubbalken 4 und 5 montiert, wobei zur Übertragung der Last in das Flugzeugbauteil 1 T-förmige Lasteinleitungsbeschläge mit dem Flugzeugbauteil 1 ebenfalls im Raster von 100 mm verschraubt sind. Die-Ableitung der Kraft erfolgt bei der nach oben gerichteten Schubkomponente F_{Sv1} durch zwei an dem Schubbalken 5 angelenkte, mit Kraftmessstäben 8 versehene Zuganker 9, die von in horizontaler Ebene einstellbaren und im Gerüst gelagerten Elemente gerüstseitig aufgenommen werden. Die Ableitung der Kraft bei der nach unten gerichteten Schubkomponente F_{Sv2} erfolgt über zwei an dem Schubbalken 4 angelenkte, mit Kraftmessstäben 10 versehenen Pendelstützen 11. Von Nachteil ist, dass die bisher bekannten Anlagen nur bis zu einem hydraulischen Druck von ca. 350 bar zum Einsatz kommen, da bei höheren Drücken im Hydrauliksystem eine Direktregelung nicht mehr möglich ist.

Der Erfindung liegt die Aufgabe zugrunde, eine Druck-Schubanlage der eingangs genannten Art zu schaffen, bei der die Druck- und Schublasten in gleicher Richtung wirken und über getrennt regelbare Elemente aufgebracht werden.

Die Aufgabe wird erfindungsgemäß dadurch gelöst, dass die nach oben wirkende vertikale Schubkraft durch einen oberhalb einer als Widerlager wirkenden Druckplatte angeordneten kraftgeregelten Hydraulikzylinder derart aufgebracht wird, dass eine horizontal verstellbare Lagerung des Hydraulikzylinders auf einen mit der Druckplatte zusammenwirkenden Kopfrahmen erfolgt sowie zwei seitlich geführte Zuganker die Kraftübertragung auf den Schubbalken übernehmen, und dass die nach unten wirkende vertikale Schubkraft durch zwei seitlich am Schubbalken angelenkte kraftgeregelte Hydraulikzylinder aufgebracht werden, die sich direkt an der Druckplatte abstützen sowie an der Konsole des in den Schubbalken integrierten Hydraulikzylinders drehbeweglich gelagert sind.

Erfindungsgemäße Ausgestaltungen bestehen darin,
- dass der Kopfrahmen konzentrisch über dem Lasteinleitungsmittelpunkt des Flugzeugbauteiles gelagert ist,
- dass die Zuganker über jeweils einen Kraftmessstab an der Konsole des in den Schubbalken integrierten Hydraulikzylinders drehbeweglich gelagert sind, und
- dass die kraftgeregelten Hydraulikzylinder über jeweils einen Kraftmessstab an der Konsole des in den Schubbalken integrierten Hydraulikzylinders drehbeweglich gelagert sind.

Ein wesentlicher Vorteil der Erfindung besteht darin, dass die Elemente zur Schubkrafteinleitung eine sich unter der Druckbelastung einstellende Längenänderung des zu prüfenden Flugzeugbauteiles kompensieren. Hierbei wird in vorteilhafter Weise die Schublast an den Vertikalseiten des Flugzeugbauteiles 1 gemäß vorgegebener Anforderungen in einem festgelegten Raster von vorzugsweise 100 mm Abstand in das Flugzeigbauteil 1 eingeleitet. Die generelle Anordnung der Hydraulikzylinder in den Schubbalken bleibt vorteilsgemäß bestehen. Die im vorhandenen System zur Schubeinleitung verwendeten Hydraulikzylinder werden modifiziert, damit die geforderte Schublast von z.B. 1700 N/mm übertragen werden kann. Dieses erfordert einen hydraulischen Druck von ca. 900 bar. In diesem Druckbereich ist eine direkte servohydraulische Proportionalregelung nicht möglich. Von Vorteil ist, dass der so veränderte Schubbalken nun als passives Lasteinleitungselement mit Längenausgleichsfunktion dient.

In der Zeichnung ist ein Ausführungsbeispiel nach der Erfindung dargestellt, und zwar zeigt die mittlere Darstellung eine Druck-Schubanlage, in der ein vorzugsweise gewölbtes Flugzeugbauteil 1 eingespannt ist. Der Schnitt A-A zeigt eine den Schubbalken 4 aufweisende Anordnung zur Einleitung der vertikalen Schubkraft F_{Sv2}, wobei die die Hydraulikzylinder 6 darstellende Einzelheit X in einer getrennten Abbildung vergrößert dargestellt ist. Der Schnitt B-B zeigt eine den Schubbalken 5 aufweisende Vorrichtung zur vertikalen Schubkrafteinleitung F_{Sv1}, wobei die Einzelheit Y die Hydraulikzylinder 7 zeigt. Diese Hydraulikzylinder sind in einer getrennten Abbildung vergrößert dargestellt.

Unter Bezugnahme auf die in der obigen Einleitung bereits beschriebene Druck-Schubanlage wird die nach oben wirkende vertikale Schubkraft F_{SV1} durch einen oberhalb der Druckplatte 3 angeordneten kraftgeregelten Hydraulikzylinder 12 aufgebracht. Die horizontal verstellbare Lagerung des Hydraulikzylinders 12 erfolgt auf dem zeichnerisch nicht dargestellten Kopfrahmen, der konzentrisch über dem Lasteinleitungspunkt des zu prüfenden Flugzeugbauteiles 1 angeordnet ist. Die Krafteinleitung auf den Schubbalken 5 übernehmen zwei seitlich geführte, mit Kraftmessstäben 8 versehene Zuganker 9. Hierbei sind die Zuganker 9 über jeweils einen Kraftmessstab 8 an der Konsole 7a des in den Schubbalken 5 integrierten Hydraulikzylinders 7 drehbeweglich gelagert.

Die nach unten wirkende vertikale Schublast F_{Sv2} wird durch zwei seitlich am Schubbalken 4 angelenkte, mit Kraftmessstäben 10 versehene kraftgeregelte Hydraulikzylinder 13 aufgebracht. In dem dargestellten Beispiel stützen sich die Hydraulikzylinder 13 an der Druckplatte 3 ab. Sie sind mit ihren entgegengesetzten Enden über die Kraftmessstäbe 10 an den Konsolen 6a des in dem Schubbalken 4 integrierten Hydraulikzylinders 6 angelenkt.

Die beschriebenen Hydraulikzylinder werden im 210-Bar-Hydrauliksystem kraftgeregelt betrieben. Die oben aufgezeigte Ausführung der Schubkrafteinleitungselemente ermöglicht in vorteilhafter Weise die Umsetzung des geforderten Lasteinleitungsverfahrens bei hoher Schublast.

### Bezuqszeichenliste

- 1: Flugzeugbauteil
- 2: Krafteinleitungstisch
- 3: Druckplatte / Widerlager
- 4: Schubbalken
- 5: Schubbalken
- 6: Hydraulikzylinder
- 6a: Konsole für den Schubbalken 4
- 7: Hydraulikzylinder
- 7a: Konsole für den Schubbalken 5
- 8: Kraftmessstäbe
- 9: Zuganker
- 10: Kraftmessstäbe
- 11: Pendelstützen
- 12: Hydraulikzylinder (für die nach oben gerichtete vertikale Schubkraft F_{Sv1})
- 13: Hydraulikzylinder (für die nach unten gerichtete vertikale Schubkraft F_{Sv2})

- F_{Dr}: = Druckkraft
- F_{SV} =: vertikale Schubkraft
- F_{Sh}: = horizontale Schubkraft

## Patentansprüche

1. Druck-Schubanlage zur Einleitung von hohen Schublasten in ein vorzugsweise gewölbtes Flugzeugbauteil zur Durchführung von Belastungsversuchen, wobei die Einleitung der Drucklast in das Flugzeugbauteil durch einen Krafteinleitungstisch erfolgt, der mit einem gerüstseitigen Widerlager das Flugzeugbauteil umfasst und der von einem kraftgeregelten Hydraulikzylinder in vorzugsweise vertikaler Richtung des Widerlagers bewegt wird, und wobei die vorzugsweise vertikalen Schublasten über zwei parallel zum Flugzeugbauteil angeordnete, in ihrer Wirkrichtung gegensätzliche Schubbalken mit integrierten Hydraulikzylindern derart in das Flugzeugbauteil eingeleitet werden, dass die Druck- und Schublasten in gleicher Richtung wirken und die Elemente zur Schubkrafteinleitung die sich unter Druckbelastung einstellende Längenänderung des Flugzeugbauteiles kompensieren,
**dadurch gekennzeichnet, dass** die nach oben wirkende vertikale Schubkraft (F_{Sv1}) durch einen oberhalb einer als Widerlager wirkenden Druckplatte (3) angeordneten kraftgeregelten Hydraulikzylinder (12) derart aufgebracht wird, dass eine horizontal verstellbare Lagerung des Hydraulikzylinders (12) auf einen mit der Druckplatte (3) zusammenwirkenden Kopfrahmen erfolgt sowie zwei seitlich geführte Zuganker (9) die Kraftübertragung auf den Schubbalken (5) übernehmen, und dass die nach unten wirkende vertikale Schubkraft (F_{Sv2}) durch zwei seitlich am Schubbalken (4) angelenkte Hydraulikzylinder (13) aufgebracht werden, die sich direkt an der Druckplatte (3) abstützen sowie an der Konsole (6a) des in den Schubbalken (4) integrierten Hydraulikzylinders (6) drehbeweglich gelagert sind.
